# EUROPEAN PATENT SPECIFICATION

(11) **EP 0 583 819 B1**
(45) Date of publication and mention of the grant of the patent: **01.05.1996**
(21) Application number: 93202263.5
(22) Date of filing: 30.07.1993
(51) Int. Cl.: F16K 7/10, F16L 55/124

(54) **Device for closing the passage in a pipe**
Vorrichtung zum Verschliessen des Durchgangs in einem Rohr
Dispositif pour fermer le passage dans un tuyau

(30) Priority: 19.08.1992 NL 9201477
(43) Date of publication of application: 23.02.1994
(73) Proprietor: J. VAN BEUGEN BEHEER B.V., NL-3223 HJ Hellevoetsluis (NL)
(72) Inventor: Govaert, Frederik Johan, NL-8603 DK Sneek (NL)
(74) Representative: Hoorweg, Petrus Nicolaas

(56) References cited:
- DE-A- 4 105 446
- GB-A- 2 140 894

## Description

The invention relates to a device for closing the passage in a pipe, which device comprises an inflatable body of elastic material such as rubber or the like, which body is connected to a pressure source for a pressure medium and, enveloping the inflatable body, a sleeve of material less elastic than that of the inflatable body. Such a device is known from DE-A-4 105 446.

Such a device serves to close the passage of a pipe, for example a gas or water pipe, for which purpose the inflatable body is arranged in the passage of the pipe in pressureless state, whereupon the pressure medium can be carried into the balloon in order to press the balloon firmly against the inner wall of the pipe. The balloon could be inflated to an undesirable size whereby rupture could occur. Guarding against this is the enveloping sleeve, which is less elastic and prevents too great an enlargement in the volume of the balloon, while a firm pressure force respectively closing force is nevertheless effected against the inner wall of the pipe. The sleeve must have a determined diameter in order to be able to close off the inner wall of the pipe. The volume increase of the balloon in axial sense is prevented by the sleeve. It is known to manufacture the sleeve from a cylindrical part along the end edges of which is fixedly sewn a conical portion of the same or other material. It has been found that this stitching easily results in tearing whereby the desired action of the sleeve is counteracted.

The invention has for its object to provide a device wherein the above stated drawbacks are obviated.

The device according to the invention is distinguished in that the sleeve consists of a piece of skin-like material which is formed into a cylindrical part of pre-determined diameter, onto either end of which connects a portion taken in by means of slantingly running lengthwise fastenings.

Because now all the fastenings, for example stitching, run in lengthwise direction of the sleeve, a much more favourable distribution of force on the stitching is present when the body is inflated, so that in the case of overpressure the danger of tearing is considerably reduced or does not arise.

If the skin-like material is not cut into, when a stitch breaks only an enlargement of the sleeve will occur and not collapse of the inflation body.

The material of the sleeve can be a knitted or woven fabric with weft and warp wires. A knitted fabric is elastic to some extent because of the loop forming.

If it is a woven fabric, the weft or warp wires can be oriented transversely of the longitudinal axis of the sleeve and be made of elastic wire. Because of this elastic possibility the sleeve can nestle against the inner wall of the pipe without folds and provide a completely gastight seal.

According to another proposal of the invention the weft and warp wires can lie slantingly of the longitudinal axis of the sleeve, whereby a determined elasticity in the peripheral direction of the sleeve is realized.

It is further recommended to embody the stitching with which the sleeve material is fastened together as elastic stitching.

Above mentioned and other features of the invention will be elucidated further in the figure description hereinbelow of a number of embodiments. In the drawing:
fig. 1 and 2 each show a perspective view of the device according to the invention respectively in uninflated situation during placing of the device in the pipe, and in inflated state during sealing of the pipe passage,
fig. 3 shows a top view of an opened out strip of skin-like material from which the sleeve according to the invention can be manufactured,
fig. 4 shows a top view corresponding with fig. 3 of a second embodiment of the strip of skin-like material,
fig. 5 shows a perspective view of a sleeve turned inside out during manufacture thereof and suitable for use in the device according to fig. 1 and fig. 2 respectively.

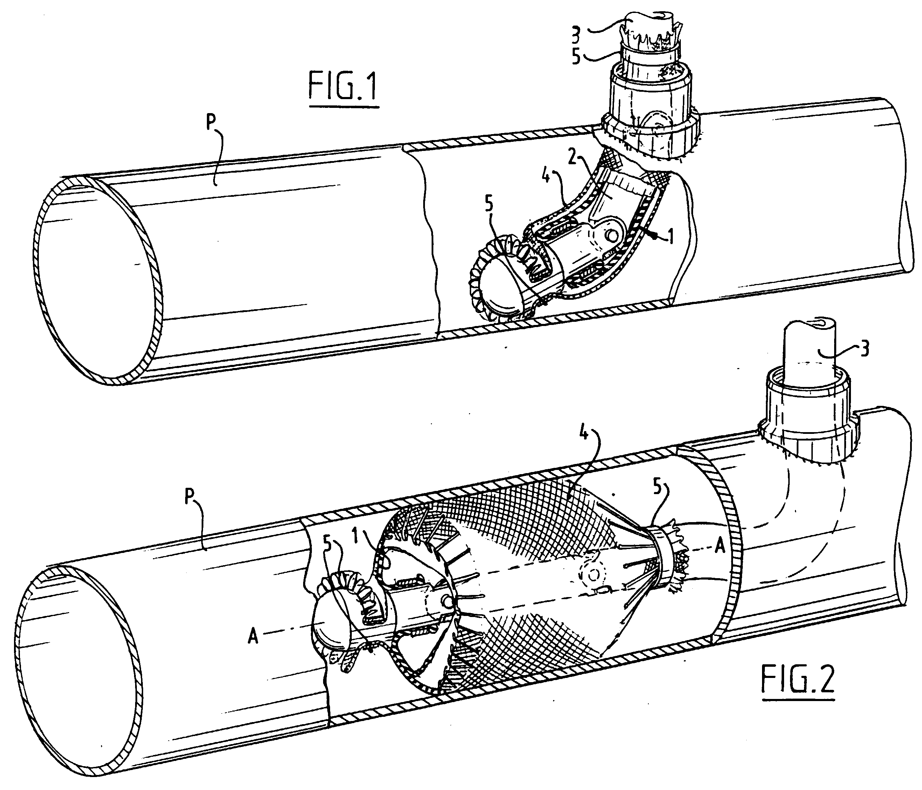

In fig. 1 and 2 a pipe P is shown perspectively, the passage of which must be temporarily closed off with a device according to the invention, which will be elucidated further hereinbelow. The device is an inflatable body which is placed via a transverse stump of the pipe into the passage thereof, whereafter the inflatable body is pressed against the inner wall of the pipe by supplying a pressure medium, for example air or water, such that any form of leakage between the pipe wall and the inflatable body is prevented. Such a device is per se known and the action thereof is deemed known and is not further elucidated.

The device shown consists of an inflatable body 1, of for instance rubber or like elastic material, which balloon in this embodiment is pushed round a guide 2, which has a number of articulated parts in order to be able to negotiate the bend when the device is introduced into the pipe P.

The inflatable body is fixedly clamped to the one end of the guide 2 by means of a clamp 5, while the other end is fixed in similar manner to another joint of guide 2. A gas or liquid-tight space is thus created which is in communication with the coupling hose 3, which can be connected to the pressure source (not shown).

Arranged round the inflatable body 1 is a sleeve 4, both ends of which are fixedly clamped to the guide 2 by means of a clamping ring 5. The sleeve 4 is of less elastic material than the inflatable body 1, so that when body 1 is inflated it comes to lie against the inside of sleeve 4, which finally determines the maximum outer dimension of the closing body. It is herein noted that the central portion of the sheath 4 has a cylindrical shape which fits closely against the inner wall of the pipe P over a determined axial length.

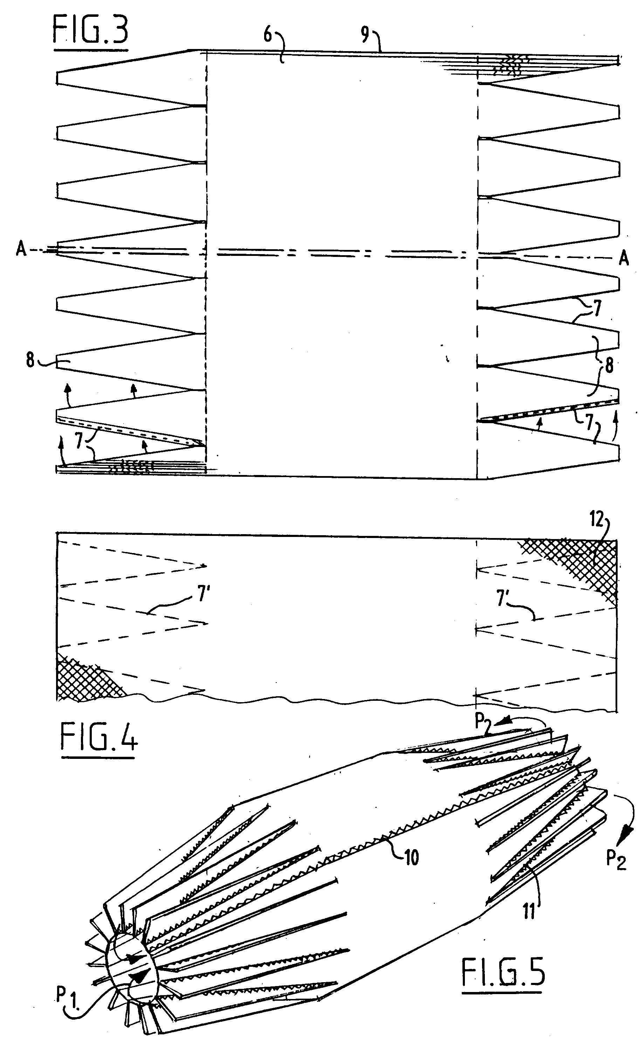

The construction of the sleeve is elucidated further with reference to fig. 3, 4 and 5.

The sleeve can be manufactured from a strip of skin-like material 6, a cut-out of which can be seen in fig. 3. The central portion is here rectangular, while along the sides lying mutually opposite trapezium-shaped portions of the same material are formed by cutting out or burning away the excess material therebetween. By mutually fastening the edges 7 of each trapezium-shaped portion 8 as well as the free edges 9 of the central part, a sheath 4 results which can be used in the device of fig. 2. The central part is formed by the part 6 of the opened out skin-like material of fig. 3, while on both sides the outwardly tapering portions are created which can be fixedly clamped to the guide by means of the clamping ring 5. It will be apparent that only lengthwise seams occur in the sleeve 4, which are indicated in fig. 5 with the main lengthwise seam 10 and the trapezium-shaped lengthwise seams.

In the embodiment according to fig. 4 is shown that it is not necessary to cut away the material portions lying between the trapezium-shaped parts 8, but to fasten the material together directly via the lines 7', whereby loop-shaped protrusions are created as can be seen in fig. 5. By then turning the sleeve inside out according to the arrows P1, P2, the triangular loop-shaped protrusions will be turned inward, which will be pressed flat against the sleeve material by the inflatable body 1 as can be seen in fig. 2.

The advantage of such a fixing method is that when a lengthwise seam 11 tears, the sleeve will release the loop but will not tear, whereby the balloon 1 contained therein will undergo only a slight increase in volume and will not burst.

The skin-like material from which the sleeve is made is preferably a woven fabric, the warp or weft wires of which are oriented respectively parallel to or perpendicular of the lengthwise direction designated with the line A-A in fig. 3, so that an optimal resistance results against axial and radial stresses in the sleeve. If nevertheless a certain elasticity of the sleeve 4 is desired, the wires perpendicular of the line A-A can be made of elastic material, whereby a diameter increase of the central part of the sleeve can be realized in simple manner, and with which is also realized that the sleeve comes to lie against the inner wall of the pipe P without folds.

It is also possible to place the weft and warp wires at an angle relative to the line A-A, which is shown at 12 in fig. 4. Such an orientation of the warp and weft wires provides a determined elastic capacity of the woven fabric with the thereby associated effect.

The invention is not limited to the above described embodiment. The number of fastening seams 7 to be arranged is random, a guide as indicated with 2 in fig. 1 and 2 does not have to be applied but the inflatable body 1 can be a balloon closed on one side, whereby the sleeve 4 can be closed directly by means of a ring 5 or the like.

It will be apparent that due to the application of lengthwise fastenings 11 no transverse fastening seams are necessary which extend perpendicularly of the main lengthwise seam 10. Tearing of the sleeve 4 is thus prevented.

## Claims

1. Device for closing the passage in a pipe, which device comprises an inflatable body (1) of elastic material such as rubber or the like, which body is connected to a pressure source for a pressure medium and a sleeve (4) of material less elastic than that of the inflatable body, enveloping the inflatable body, **characterized in that** the sleeve consists of a piece of skin-like material which is formed into a cylindrical part of pre-determined diameter, onto either end of which connects a part taken in by means of slantingly running lengthwise fastenings.

2. Device as claimed in claim 1, **characterized in that** the or each fastening seam has a straight progression.

3. Device as claimed in claim 1 or 2, **characterized in that** the or each fastening seam is formed by a stitching.

4. Device as claimed in claim 3, **characterized in that** the stitching is embodied as an elastic stitching.

5. Device as claimed in any of the foregoing claims, **characterized in that** the skin-like material for the sleeve is a woven fabric with weft and warp wires.

6. Device as claimed in claim 5, **characterized in that** the wires which are oriented transversely of the longitudinal axis A-A of the sleeve consist of elastic material.

7. Device as claimed in claim 5, **characterized in that** the weft and warp wires of the woven fabric both lie at an angle to the longitudinal axis A-A of the sleeve.

8. Device as claimed in any of the claims 1-4, **characterized in that** the skin-like material has a loop-shaped structure such as a knitted fabric.

## Patentansprüche

1. Vorrichtung zum Verschließen des Durchganges in einem Rohr, wobei die Vorrichtung einen aufblasbaren Körper (1) aus elastischem Material wie Gummi oder ähnliches, der mit einer Druckquelle für ein Druckmedium verbunden ist, und eine Hülse (4) aus einem Material, das weniger elastisch als das des aufblasbaren Körpers ist, aufweist, wobei die Hülse den aufblasbaren Körper umhüllt,
dadurch gekennzeichnet, daß die Hülse aus einem Stück eines hautartigen Materiales besteht, das in einen zylindrischen Teil eines vorbestimmten Durchmessers gebildet ist, auf dem ein Ende davon mit einem Teil verbunden ist, das mittels schräg verlaufender längsweiser Besfestigungen eingezogen ist.

2. Vorrichtung nach Anspruch 1, dadurch gekennzeichnet, daß die oder jede Befestigungsnaht einen geraden Verlauf aufweist.

3. Vorrichtung nach Anspruch 1 oder 2, dadurch gekennzeichnet, daß die oder jede Befestigungsnaht durch Stiche gebildet ist.

4. Vorrichtung nach Anspruch 3, dadurch gekennzeichnet, daß die Stiche als elastische als elastische Stiche ausgeführt sind.

5. Vorrichtung nach einem der vorhergehenden Ansprüche, dadurch gekennzeichnet, daß das hautartige Material für die Hülse ein gewebtes Textil mit Schuß- und Kettfäden ist.

6. Vorrichtung nach Anspruch 5, dadurch gekennzeichnet, daß die Fäden, die quer zu der Längsachse A-A der Hülse angeordnet sind, aus elastischem Material bestehen.

7. Vorrichtung nach Anspruch 5, dadurch gekennzeichnet, daß die Schuß- und Kettfäden des gewebten Textil beide in einem Winkel zu der Längsachse A-A der Hülse liegen.

8. Vorrichtung nach einem der Ansprüche 1 bis 4, dadurch gekennzeichnet, daß das hautartige Material eine schleifenförmige Struktur wie ein gestricktes Textil aufweist.

## Revendications

1. Dispositif servant à obturer le passage dans un tuyau, dispositif qui comprend un ccrps gonflable (1) en matériau élastique tel que le caoutchouc ou similaire, corps qui est relié à une source de pression destinée à un milieu sous pression, et un manchon (4) en matériau moins élastique que celui du corps gonflable, enveloppant le corps gonflable, caractérisé en ce que le manchon est constitué d'une partie en matériau du type peau, qui est formée en une partie cylindrique de diamètre prédéterminé, à l'une ou l'autre extrémité de laquelle se raccorde une partie incorporée au moyen de fixations inclinées.

2. Dispositif selon la revendication 1, caractérisé en ce que la couture, ou chaque couture de fixation, présente une progression droite.

3. Dispositif selon la revendication 1 ou 2, caractérisé en ce que la couture, ou chaque couture de fixation est formée par une piqûre.

4. Dispositif selon la revendication 3, caractérisé en ce que la piqûre est réalisée sous forme de piqûre élastique.

5. Dispositif selon l'une quelconque des revendications précédentes, caractérisé en ce que le matériau du type peau destiné au manchon est un tissu tissé avec des fils de trame et de chaîne.

6. Dispositif selon la revendication 5, caractérisé en ce que les fils qui sont orientés transversalement par rapport à l'axe longitudinal A-A du manchon sont constitués en matériau élastique.

7. Dispositif selon la revendication 5, caractérisé en ce que les fils de trame et de chaîne du tissu tissé forment tous un angle par rapport à l'axe longitudinal A-A du manchon.

8. Dispositif selon l'une quelconque des revendications 1 - 4, caractérisé en ce que le matériau du type peau présente une structure à boucles telle que celle d'un tissu tricoté.
